# EUROPEAN PATENT APPLICATION

(11) **EP 3 537 271 A1**
(43) Date of publication of application: **11.09.2019**
(21) Application number: 18159984.6
(22) Date of filing: 05.03.2018
(51) Int. Cl.: G06F 3/044

(54) **TRANSPARENT BUTTON FOR CAPACITIVE TOUCH SCREEN**

(71) Applicant: Advanced Silicon SA, 1007 Lausanne (CH)
(72) Inventor: Ballan, Hussein, 1806 St-Légier (CH); Pastre, Marc, 1024 Ecublens (CH); Maréchal, Sylvain, 1008 Prilly (CH)
(74) Representative: P&TS SA (AG, Ltd.)

(57) **Abstract**

Button for a capacitive touch screen (1) comprising a support member (21) with a flat support surface (211) for fixing the support member (21) on the capacitive touch screen (1), wherein the flat support surface (211) defines the screen plane (14); and an activation member (22) which is movable towards the screen plane (14) for touching the screen plane (14) to activate the button (2), wherein the activation member (22) comprises a transparent user contact surface and a touch screen contact surface (225), wherein the transparent user contact surface is configured to transfer information displayed on the capacitive touch screen (1) under the transparent user contact surface and is configured such that a user can press on the transparent contact surface to activate the activation member (22), wherein touch screen contact area (225) is configured to touch the screen plane (14), when the activation member (22) is activated, wherein the touch screen contact surface (225) comprises a conductive contact portion (224) configured to be detected by the capacitive touch screen (1), wherein the activation member (22) comprises a transparent conductive layer (222) under the transparent user contact surface conductively connected with the conductive contact portion (224), wherein a material of the transparent conductive layer (222) is encapsulated for not coming in contact with air or with the user.

## Description

### Field of the invention

The present invention concerns a transparent button for a capacitive touch screen.

### Description of related art

It is known in the field of slot machines button decks to use touch screens with electro-mechanical buttons on the touch screen surface. The electro-mechanical button is configured to display information on the button itself. In a first solution, a recess is provided in the touch screen area, outside the main LCD active area, for providing the button activation mechanism under the button. A separate LCD display is provided in the button to display the button information. However, this solution is complex. A second solution would be to glue a transparent button on the touch screen whose activation is detected by the touch screen and which displays the picture of the touch screen below the button. However, this solution has several disadvantages. The height of the total stack from the surface of the LCD, through the touch panel and the mechanical button provides a parallax with unacceptable distortion of the information displayed under the button. The passive detection of the activation of the button is error-prone. Since the mechanical button in the field of gaming must work with a high precision and must support high stress, the second solution is not much used yet.

In other fields, (semi-)transparent buttons for touch screens are known. For example, GB2516439 discloses a mechanical keypad with transparent buttons to see the virtual keys displayed under the mechanical keypad. The transparent buttons comprise on its top and bottom surface a transparent conductive layer which are conductively connected. When a user touches the button, the charges of the user are conducted from the top surface to the bottom surface. When the bottom surface touches the touch screen surface, the activated bottom is detected safely as a finger touch on the touch screen, because the charge of the finger is conducted to the touch screen surface. Thus, this transparent button provides a solution for the detection reliability. However, the contact is meant ohmic with the human finger with transparent conductive layers providing poor transparency levels to display information with a high quality level. Therefore, this transparent button is not suitable for slot machines button decks which should display the display information below the button at a high quality.

### Brief summary of the invention

It is the object to provide a mechanical button for touch screen which provides a display of information at high quality on the button and which can be detected with a high reliability.

This object is achieved by the button according to claim 1.

The encapsulation of the material of the transparent conductive layer protects the transparent conductive layer from air and the contact of the user. This allows to use transparent conductive layers with a higher transparency level, maintaining a high detection quality.

The dependent claims refer to further advantageous embodiments.

In one embodiment, the material of the transparent conductive layer is a transparent conductive oxide, in particular an indium tin oxide. This material provides an optimal compromise between transparency and conductivity.

In one embodiment, the transparent conductive layer is insulated from the transparent user contact surface of the activation member. This allows to use transparent conductive layers which are not in enable the use of high optical quality conductive material such as Indium Tin Oxide (ITO) providing excellent transparency level. The detection level might be a little bit reduced, since the charges of the user touch the transparent user contact surface are not any more galvanically connected to the touch screen contact surface. However, due to the arrangement of the transparent conductive layer under the transparent user contact surface, the charges of the human finger are connected over a large capacitance between the finger and the transparent conductive layer (capacitance of the button) to the touch screen contact surface. Thus, the touch screen contact surface is connected over the series connection of the capacitance of the human finger and of the button to earth. Due to the large capacitance of the button, the capacitance of the finger remains dominant and can be detected with a high detection quality at the touch screen. Therefore, the present solution combines the advantages of a good detection quality and a good transparency level of a transparent passive mechanical button for a touch screen.

### Brief Description of the Drawings

The invention will be better understood with the aid of the description of an embodiment given by way of example and illustrated by the figures, in which:
Fig. 1 shows a cross-sectional view of a first embodiment of the system according to the invention with a touch screen and a button.
Fig. 2 shows a schematic view of the touch detection mechanism of the touch screen.
Fig 3A shows the capacitive circuit of a touch pixel of the touch sensor of the touch screen.
Fig 3B shows the capacitive circuit of the touch pixel of the touch sensor of the touch screen, when a human finger touches the touch pixel.
Fig. 3C shows the capacitive circuit of the touch pixel of the touch sensor of the touch screen, when the button pressed by a human finger touches the touch screen.
Fig. 4 shows a cross-sectional view of a second embodiment of the system according to the invention with a touch screen and a button.
Fig. 5 shows a cross-sectional view of a third embodiment of the system according to the invention with a touch screen and a button.
Fig. 6 shows a cross-sectional view of a fourth embodiment of the system according to the invention with a touch screen and a button.
Fig. 7 shows the fourth embodiment with the activated button.
Fig. 8 shows a first top view of the fourth embodiment.
Fig. 9 shows a second top view of the fourth embodiment.

### Detailed Description of possible embodiments of the Invention

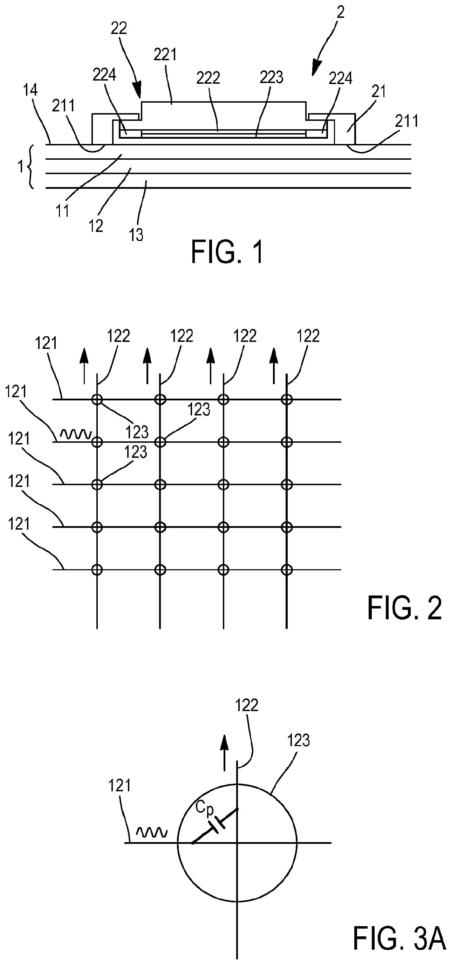

Fig. 1 shows a first embodiment of a system comprising a touch screen 1 and a mechanical button 2.

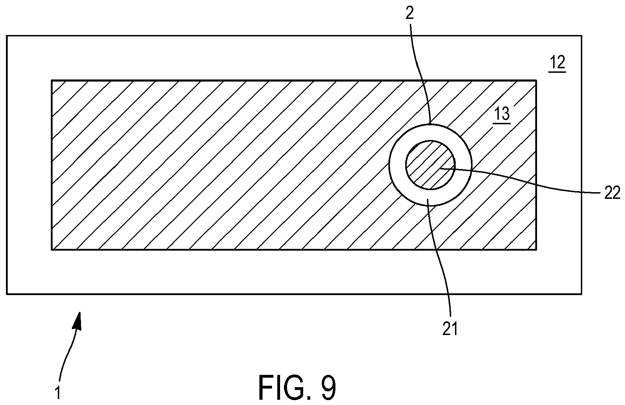

A touch screen 1 comprises a touch sensor and a display. The touch screen 1 comprises a (flat) touch screen surface 14. The touch screen surface 14 is preferably provided by a protective layer 11 like a glass or other transparent material. The touch screen 1 and/or the touch sensor comprises a touch sensor area 12 for detecting the position of a touch of an object, preferably of a human, preferably of a human finger. The touch sensor area 12 is arranged in a layer parallel to the touch screen surface 14. The touch screen 1 and/or the display comprises a display area 13 for displaying information and/or a display signal. The display area 13 is arranged in a layer parallel to the touch screen surface 14. The display area 13 and the touch sensor area 12 are at least partially overlapping. The overlapping area of the display area 13 and the touch sensor area 12 is defined the touch screen area which allows the display of information on the touch screen surface 14 in the touch screen area and the detection of the position of a touch on the touch screen surface 14 in the touch screen area. The touch screen area could be: identical to the display area 13 and the touch sensor area 12; identical to the display area 13 only (with the touch sensor area 12 being larger than the display area 13; see for example Fig. 9); identical to the touch sensor area 12 only (with the display area 13 being larger than the touch sensor area 12); or different from/smaller than the display area 13 and the touch sensor area 12 (with the touch screen area being defined by the intersection or overlap area of the display area 13 and the touch sensor area 12). Preferably, the layer of the touch sensor area 12 is arranged above or over the layer of the display area 13. The protective layer 11 is preferably arranged above or over the layers of the touch sensor area 12 and the display area 13.

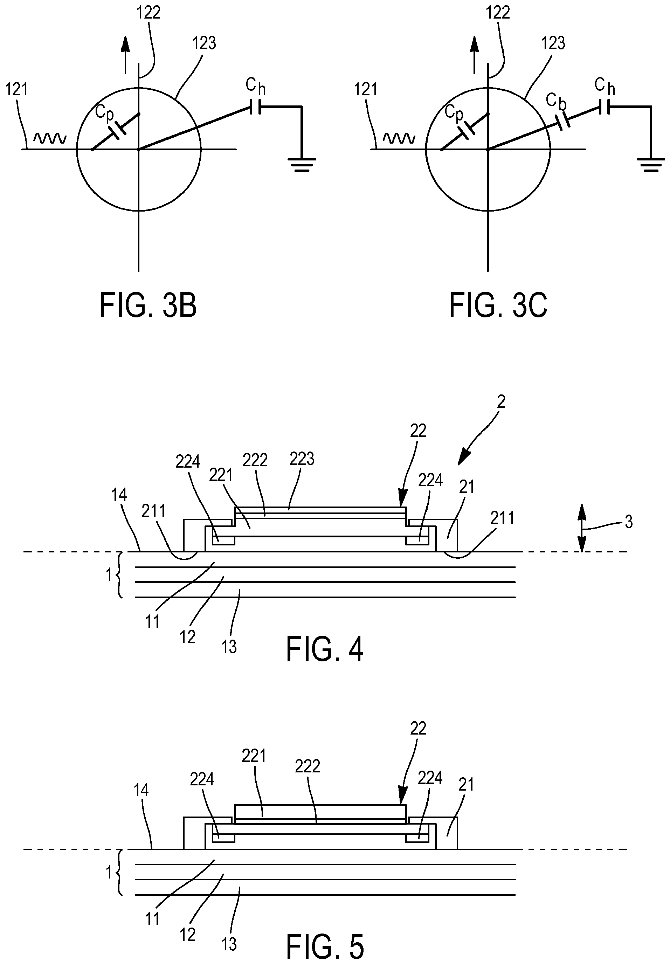

The normal vector of the touch screen surface 14 defines a first direction 3, visible for example in Fig. 4. The first direction 3 is considered to be directionless, meaning to include both, the direction of the normal vector and the direction against the normal vector. The term "above" is defined such that an object or layer A is arranged above the object or layer B, when A is arranged off-set in the direction of the normal vector. This means that A is closer to the touch screen surface 14 than B, if A and B are arranged both in the touch screen 1 and that B is closer to the touch screen surface 14 than A, if A and B are arranged above the touch screen 1. For objects, surfaces or layers which are not flat, A being above B means that each point of A is above its corresponding overlapping (see definition below) point of B (not necessarily above all the other points of B). The term "below" is defined such that an object or layer A is arranged below the object or layer B, when A is arranged off-set in the direction opposite to the normal vector. This means that B is closer to the touch screen surface 14 than A, if A and B are arranged both in the touch screen 1 and that A is closer to the touch screen surface 14 than B, if A and B are arranged above the touch screen 1. For objects, surfaces or layers which are not flat, A being below B means that each point of A is below its corresponding overlapping (see definition below) point of B (not necessarily below all the other points of B). The term "overlapping" is defined such that an object, area or surface A overlapping an object, area or surface B means that the projection of the object, area or surface A in the first direction 3 intersects the objects, area or surface B at least partly. The term "completely overlapping" is defined such that an object, area or surface A completely overlapping an object, area or surface B means that the complete projection of the object, area or surface A in the first direction 3 intersects or lays in the objects, area or surface B (not necessarily meaning that B is completely overlapping A). The term "identically overlapping" is defined such that an object, area or surface A identically overlapping an object, area or surface B means that A is completely overlapping B and B is completely overlapping A. The term "under", "completely under" and "identically under" is defined such that A being under, completely under and identically under means that A is below B and A is overlapping, completely overlapping and identically overlapping B, respectively. The term "over", "completely over" and "identically over" is defined such that A being over, completely over and identically over means that A is above B and A is overlapping, completely overlapping and identically overlapping B, respectively.

The display is configured to display information of a computer or processor on the touch screen surface 14 in the display area 13 and/or in the touch screen area. Preferably, the display area 13 and/or the touch screen area comprises a plurality of display pixels distributed over the display area 13. The display can be an LCD or an OLED display or any other flat screen technology display.

The touch sensor of the touch screen 1 is configured to detect the position of a touch or contact of an object like a finger, a pen or a button 2 (as described in more detail below) on the touch screen surface 14 (in the touch sensor area 12 and/or in the touch screen area). A touch or a contact can be a physical contact of the object with the touch screen surface 14 or the presence of the object in the close vicinity of the touch screen surface 14 in which the presence of the object can be measured in the capacitance value measured (often called "hovering"). Normally the detection range of a passive capacitive touch sensor is smaller than 3 mm, preferably smaller than 2 mm, preferably smaller than 1 mm above or over the touch screen surface 14. The touch sensor is a capacitive touch sensor and is configured to detect the touch of the object on the basis of the change of a capacitance detected on the touch screen surface 14.

In one embodiment, the touch sensor 1 (more precisely the touch sensor area 12) comprises a plurality of touch pixels 123 distributed over the touch screen surface 14 and/or the touch sensor area 12 (see Fig. 2). Each touch pixel 123 is configured to detect a capacitance from which a touch of an object at or around the touch pixel can be determined. Fig. 2 shows an embodiment for a touch sensor area 12. The touch pixels 123 are preferably arranged in an array of first lines (in a first direction) and second lines (in a second direction, preferably perpendicular to the first direction). Each touch pixel 123 can be identified by the corresponding first and second line. The touch pixels 123 of each first line are connected by a first conductor 121 connecting serially all touch pixels 123 of the same first line. Consequently, each first line has a corresponding first conductor 121. The touch pixels 123 of each second line are connected by a second conductor 122 connecting serially all touch pixels 123 of the same second line. Consequently, each second line has a corresponding second conductor 122. Each touch pixel 123 is formed by a capacitive connection between one of the first conductor 121 and one of the second conductor 122 as shown in Fig. 3A. A touch or a contact of an object at a certain touch pixel 123 is detected by measuring a change in the capacitance value caused by the presence of the object. The measured capacitive changes for example in the presence of a human finger, because of the capacitive connection between the touch pixel 123 and earth with the capacitance Cₕ of the human as shown in Fig. 3B. Other objects like metal objects can also be detected due to the presence of charges in the metal material. However, the detection quality without the connection to earth via the user is less good. The touch sensor is configured to measure the capacitance at the touch pixels 123, the first lines and/or second lines sequentially, i.e. in subsequent distinct time windows of one sampling period. Once the capacitance is measured for all touch pixels, all first lines and/or all second lines, a touch frame of the measurements of all touch pixels within one sampling period is created to detect the presence and/or position of an object on the touch sensor surface 14. Preferably, the touch sensor is configured for passively detecting positions of a passive object on the touch screen surface 14 in the touch sensor area 12. In one embodiment, a passive detection can be achieved by applying a driving signal on the touch pixels of a first line or on the corresponding first conductor 121 and by measuring (sequentially or at the same time) the output of the second lines or the second conductors 122. The driving signal is applied sequentially to each (and/or only one) of the first lines/conductors 121 so that the output signal for each combination of first line and second line, thus for each touch pixel 123, can be measured. Based on the output signals for each touch pixel 123, the capacitance value of each touch pixel 123 of the touch sensor area 12 (and in the touch frame) can be measured. If the capacitance value of a touch pixel 123 goes over or under a certain threshold, a touch is detected at this touch pixel 123. Therefore, the touch sensor comprises preferably a driving circuit for driving the first conductors 121 and a sensing circuit for measuring the output of the second conductors 122. The driving circuit is connected to the first lines for sequentially applying a driving signal at the first lines or conductors 121. The sensing circuit is connected to the second lines or conductors 122 for measuring for each driven first line or conductors 121 the output of all second lines or conductors 122. Preferably, the sensing circuit comprises at least one charge sensor and at least one digital to analogue converter.

The button 2 comprises a support member 21 and an activation member 22, for example visible in the embodiment of Fig. 1.

The support member 21 is fixed on the touch screen surface 14. Preferably, the support member 21 has a support surface 211 for fixing the support member 21 on the touch screen surface 14. The support surface 211 is preferably flat and/or is arranged in a single plane. Preferably, the support member 21 is fixed in a non-removably/non-detachably manner on the touch screen surface 14. Preferably, the support member 21 is glued (with the support surface 211) on the touch screen surface 14. In an alternative embodiment, the support member 21 can be fixed in a removably/detachably manner. This can be realised by simply placing the button 2 with the support surface 211 on the touch screen surface 14 such that the support member 21 is fixed by the gravity and/or friction. This can be improved by a high friction surface on the support surface 211. This can also be realised by detachable fixation mechanisms like a suction surface on the support surface 211.

The button 2 is described in the above system as fixed to the touch screen 1. The button 2 is however also protected without the touch screen 1. The button 2 is then configured to be fixed to the (flat) touch screen surface 14 of the touch screen 1. The touch screen surface 14 of the above described system corresponds in this case to the screen plane defined by the plane going through the flat support surface 211 of the support member 21. The first direction 3 with respect of the button 2 is defined as the direction of the normal vector of the flat support surface 211. Since the normal vector of the flat support surface 211 directs opposite to the normal vector of the touch screen surface 14, the terms "above" and "below" are defined inverse with respect to the normal vector of the flat support surface 211 compared to the normal vector of the touch screen surface 14.

The support member 21 is further configured to support the activation member 22 such that the activation member 22 can be moved towards the touch screen surface 14 to contact the touch screen surface 14 with a touch screen contact surface 225 of the activation member 22. The movement of the activation member 22 towards the touch screen surface 14 provides the activation of the activation member 22. Preferably, the support member 21 and the activation member 22 are two distinct pieces, wherein the activation member 22 can perform a translational movement in the first direction 3 in the support member 21. Preferably, the activation member 22 is rigid and/or the movement of the activation member 22 for contacting the touch screen surface 14 with the touch screen contact surface 225 of the activation member 22 is translational without a deformation of the activation member 21. However, it is also possible that the movement includes additionally also a deformation of the activation member 22, when the activation member 22 is at least partly flexible. It is also possible that the support member 21 and the activation member 22 are made of one piece and the movement is realised by a deformation of the button 2/activation member 22. However, a rigid activation member 22 is preferred, because it provides a higher transparency for displaying the information of the touch screen area under the button 2 and is more robust than a flexible material like rubber. The support member 21 comprises preferably a mechanism for creating an audible sound/click and/or a tactile click, when the activation member 22 is activated and/or moved towards the touch screen surface 14. An audible sound/click means a sound which can be listened by a user when activating the activation member 22 to understand that the button 2 was activated/successfully pressed. A tactile click means a change in the pressure necessary for moving the activation member 22 which indicates that the activation was successful. The support member 21 has preferably a ring form around the activation member 22. The ring form has preferably the same shape as the activation member 22 (with the same diameter than the activation member 22 at the inner border of the ring shape and a larger diameter than the activation member 22 at the outer border). The shape of the activation member 22 and/or of the ring shape of the support member 21 is preferably a circle, an ellipse, a rectangular, a square or other. The support member 21 has the function of a frame or a housing of the button. The button 2 comprises preferably a stopper which blocks the activation member 22 at its not-activated position and/or at its highest position with the largest distance from the touch screen surface 14. The stopper can for example be provided by an upper surface of an outer ring of the activation member 22 being stopped against (a lower surface of) an inner ring of the support member 21. However, many other stopper mechanisms are possible. Preferably, the button 2 comprises a force mechanism for pressing the activation member 21 in its not-activated position and/or its highest position (when the user does not activate and/or press down the activation member 22). This force activation member can for example be realised by a spring. However, any other force mechanism can be used as well. The activation member 22 is in an activated or lower position, when the activation member 22 touches or contacts the touch screen surface 14.

The activation member 22 comprises a user contact surface on the top (facing away from the touch screen surface 14) of the activation member 22. The user contact surface is the portion of the activation member 22 which can be touched by a user in order to press the activation member 22 down (towards the touch screen surface 14). The user contact surface is transparent such that the user can see through the transparent user contact surface what is displayed on the touch screen area under (the transparent user contact surface of) the activation member 22.

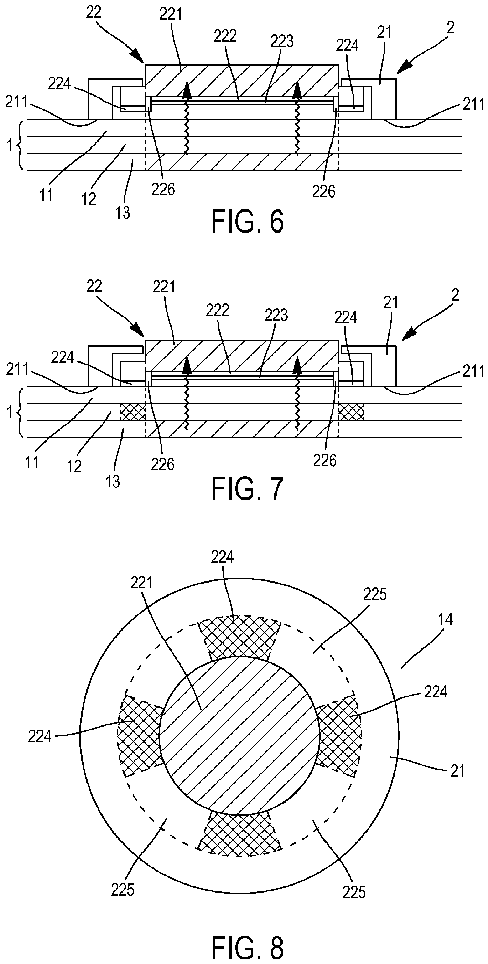

The activation member 22 comprises further a touch screen contact surface 225 (visible for example in Fig. 8) configured to touch/contact the touch screen surface 14, when the activation member 22 is activated and/or pressed against the touch screen surface 14. The touch screen contact surface 225 is preferably parallel to the touch screen surface 14 (when in the top/non-activated position and/or in the lower/activated position). The touch screen contact surface 225 comprises preferably at least one conductive contact portion 224 which can be detected by the touch sensor, when the touch screen contact surface 225 of the activation member 22 comes into contact with the touch screen surface 14. The conductive contact portion 224 could be realised by coating the touch screen contact surface 225 at least partly with a conductive material/layer. The at least one conductive contact portion 224 is preferably arranged under, preferably completely under the support member 21 and/or not under the transparent user contact surface. This allows that the conductive contact portion 224 does not infer with the transparency of the transparent user contact surface. The conductive portion can be a conductive ring around the activation member 22. The at least one conductive contact portion 224 can also comprise at least two separate conductive contact portions 224 (which preferably are not conductively connected over the touch screen contact surface 225 of the activation member 22) such that the at least two separate conductive contact portions 224 can be distinguished by the touch sensor.

According to the invention, the activation member 22 comprises a transparent conductive layer 222 under the transparent user contact surface. The transparent conductive layer 222 is conductively connected with the conductive contact portion 224 of the touch screen contact surface 225. Preferably, the transparent conductive layer 222 is encapsulated such that the material of the (thin) transparent conductive layer is protected from physical damages and/or is not in contact with air or with the finger pressing on the user contact surface of the activation member 22 and/or such that the material does not chemically react with the ambient air, in particular does not oxidize. This allows to use materials which combine a high transparency level with good conductivity, but would be damaged by contact of the human finger or air. For example transparent conducting oxide (TCO), in particular an indium tin oxide (ITO) have such properties but cannot be used on the surface of the activation member 22. Preferably, the material of the transparent conductive layer is a TCO, in particular ITO. Preferably, the activation member 22 comprises an activation member body 221. The activation member body 221 is preferably made of a transparent (and rigid) material like glass or poly methyl methacrylate. The activation member body 221 comprises preferably a top side (facing away from the touch screen surface 14) and a lower side (facing towards the touch screen surface 14). The top side and the lower side are preferably parallel (at least in the region of the transparent user contact surface) in order to provide a clear view on the display area 13 or touch screen area below the transparent user contact surface. The transparent conductive layer 222 is preferably coated or deposited on the lower side of the activation member body 221. The transparent conductive layer 222 is preferably encapsulated by a protective film or layer 223 coated, deposited or otherwise arranged on the transparent conductive layer 222. This protection layer 223 protects the transparent conductive layer 222 from contact with air and/or from physical damage. The protective layer 223 is also transparent. The arrangement of the transparent conductive layer 222 on the lower side has the advantage that the transparent conductive layer 222 and the protective layer 223 are protected from the influence of the user. It allows also to realise a simple conductive connection between the transparent conductive layer 222 and the conductive contact portion 224. The conductive contact portion 224 could for example touch the transparent conductive layer 222 to realize the ohmic contact. As shown in Fig. 4, the transparent conductive layer 222 can equally be deposited/coated/arranged on the top side of the active member body 221. The transparent conductive layer 222 on the top side is preferably encapsulated by a protective film or layer 223 coated, deposited or otherwise arranged on the transparent conductive layer 222. However, the arrangement at the lower side is preferred such that the transparent conductive layer 222 and/or the protective layer 223 cannot be damaged by the user and the ohmic connection between the transparent conductive layer 222 and the conductive contact portion 224 is more difficult. This could be realised for example by conductive coatings or layers along the sides of the activation member 22 and/or by conductive through holes through the activation member 22 and/or the activation member body 221. It is also possible to arrange the transparent conductive layer 222 inside the activation member body 221 as shown in Fig. 5. As in the embodiments in Fig. 1 and 4 preferably, the transparent conductive layer 222 is encapsulated in the activation member body 221 in order not to get in contact with air and/or to be protected from physical damage. However, this embodiment shown in Fig. 5 is more complex for the manufacturing of the activation member 22.

In a first embodiment, the transparent conductive layer 222 is insulated from the (complete) user contact surface of the activation member 22, i.e. from the (complete) surface the user can contact to press the activation member 22 down (including also eventual non- or less transparent portions). The term "insulated" refers in herein to an electrically insulation in the sense that no galvanic or conductive connection exists. In the following the electrically function of the detection of the button 2 is described in more detail. Fig. 3C shows the detection situation at a touch pixel 123 over which a conductive contact portion 224 of the activation member 22 is pressed against the touch screen surface 14 by a finger of the user. Since the finger of the user is not directly contacting the touch pixel 123 and also not conductively connected to the touch pixel 123, the touch pixel 123 is connected over the series connection of the capacitance C_{b} of the button 2 and the capacitance Cₕ of the human. Therefore, the touch pixel 123 will detect the capacitance of the series connection of those two capacitances connected to earth. Without the transparent conductive layer 222, the distance between the user and the conductive contact portions 224 is large and the capacitance C_{b} of the button 2 is very low. The low capacitance C_{b} of the button 2 will thus dominate the capacitance of the series connection of capacitances such that the capacitance Cₕ of the human will not be detected any more. Therefore, activation members 22 without such transparent conductive layer 22 or without a conductive connection between the user contact surface and the conductive contact portion 224 are not very reliable for detecting the activation of the activation member 22 in the touch sensor. The transparent conductive layer 222 under the transparent user contact surface of the activation member 22 provides now a short distance between the finger of the user and the transparent conductive layer 222. This infers a high capacitance value C_{b} of the button 2 and thus leads to a large influence of the capacitance Cₕ of the human finger in the series connection of the two capacitances. Therefore, the encapsulated transparent conductive layer 222 provides a high transparency due to the possibility to use conductive materials reacting with air and a better detection reliability, even if the transparent conductive layer 222 is not in galvanic (electrically conductive) connection or is insulated from the surface of the (transparent) user contact surface and thus from the finger of the user.

In a second embodiment (not shown), the transparent conductive layer 222 under the transparent user contact surface could be conductively connected at a (small) portion of the user contact surface to the latter. The conductive connection could be provided by at least one connection portion conductively connecting the user contact surface and the transparent conductive layer 222. The connection portion is made off a different material than the transparent conductive layer 222. The different conductive material is preferably more stable under contact with air. The different conductive material is preferably (semi-)transparent. The different conductive material is normally less transparent than the (material of the) transparent conductive layer 222. The connection portion conductively connects the user contact surface in the first direction 3 to the transparent conductive layer 222. However, since the different conductive material is needed only for a very small portion or in a portion of the user contact surface for which less transparency (or no transparency) is accepted, this different conductive material does (almost) not disturb the view on the display image shown on the touch screen surface 14 under the transparent user contact surface of the activation member 22. This embodiment could be realised similar to the embodiment of Fig. 4, wherein one or more points of the protective film is/are replaced by a conductive protective film so that the one or more points of the conductive protective film provide conductive portion.

In the embodiments of Fig. 1, 4 and 5, the bottom side of the activation member 22 (body 222) is flat. Alternatively, the bottom side could provide a cavity formed under the user contact surface and/or under the transparent conductive layer 222. The concave shape of the cavity formed under the transparent conductive layer 222 prevents that the transparent conductive layer 222 is directly in contact with the touch screen surface 14 as some violent activation of the button 1 could cause some damages in the transparent conductive layer 222. More generally formulated it is thus advantageous that the transparent conductive layer 222 is arranged more distant from the touch screen surface 14 than the touch screen contact surface 225 and/or the conductive contact portion 224. Thus, the bottom side forms the touch screen contact surface 225 with the conductive contact portion 224 and the cavity. The conductive contact between the transparent conductive layer 222 and the conductive contact portion 224 can be realised by connection coatings 226 at the side walls of the cavity. Preferably, the top and bottom side of the activation member body 221 are parallel and/or the activation member 22 in the region of the transparent user contact surface has a constant thickness. This prevents a distortion of the display image displayed under the button 2 by the activation member 22.

Preferably, the at least one conductive contact portion 224 comprises at least two distinct conductive contact portions 224 which touch the touch screen surface 14 at two distinct positions on the touch screen surface 14 (see for example Fig. 8). The at least two distinct conductive contact portions 224 are preferably not conductively connected over the touch screen contact surface 225 (but otherwise conductively connected). This avoids ghost effects when detecting the activated button.

Fig. 6 and 7 shows how the display image from the display area 13 under the transparent user contact surface is transferred on the transparent user contact surface of the activation member 22. Preferably, the button 2 is very thin such there is only a small parallax for the display image. This avoids the use of a complex light pipe or of an additional display in the activation member 22. Preferably, the button 2 (in the non-activated position of the activation member 22) has a height smaller than 15 mm, preferably than 10 mm, preferably than 7 mm, preferably than 5 mm (above the touch screen surface 14). Preferably, the activation member 22 is moved from its non-activated position in its activated position less than 10 mm, preferably less than 7 mm, preferably less than 5 mm, preferably less than 4 mm, preferably less than 3 mm. Preferably, the activation member 22 is moved from its non-activated position in its activated position more than 1 mm, preferably more than 2 mm, preferably more than 3 mm, preferably more than 4 mm. Preferably, the activation member 22 has a thickness smaller than 10 mm, preferably than 8 mm, preferably than 6 mm, preferably than 5 mm, preferably than 4 mm, preferably than 3 mm.

Fig. 6 shows the activation member 22 in its non-activated position. Fig. 7 shows the activation member of the embodiment of Fig. 6 in its activated position. Now the conductive contact portion 224 of the activation member touches the touch screen surface 14 of the touch screen 1. This can be detected in the change in the capacitance in the touch pixels 123 of the touch sensor area 12 under the conductive contact portion 224. This allows to detect the touch of the conductive contact portion 224 on the touch screen surface 14 and thus the activation of the button 2 with a high reliability.

The user contact surface of the activation member 22 is preferably transparent in the complete user contact surface, i.e. in the complete surface of the activation member 22 configured to be contacted by the user and to press down the activation member 22. However, it is also possible that the transparent user contact surface is only a portion of the complete user contact surface. The transparency of the transparent user contact surface has preferably a constant transparency level over the complete transparent user contact surface.

The transparent conductive layer 222 is arranged under the transparent user contact surface. Preferably, the transparent conductive layer 222 extends completely under the transparent user contact surface, preferably completely under the user contact surface. However, it is also possible that the transparent conductive layer 222 has a shape whose projection on the touch screen surface 14 shows a pattern which can be recognised in the touch sensor. The pattern is preferably not rotationally symmetric around the centre of this pattern. The transparent conductive layer 222 should preferably cover at least 30%, more preferably at least 50%, even more preferably at least 70%, even more preferably at least 80% of the (transparent) user contact surface.

In the described embodiments, the transparent conductive layer 222 is conductively connected (in ohmic connection) with the conductive contact portion 224 for a detection of a contact of the conductive contact portion 224 on the touch screen surface 14. In an alternative realisation, it is also possible to omit the conductive contact portion 224 and to detect directly (at least a portion of) the transparent conductive layer 222 in the touch sensor, when the touch screen contact surface 225 touches the touch screen surface 14. If the distance of the transparent conductive layer 222 from the touch screen surface 13 is low, the capacitance between the transparent conductive layer 222 and the touch sensor area 12 is high, such that the capacitance of the finger touching the user contact surface of the activation member 22 can be detected in the touch sensor (even without the contact portion 224). In the detection scenario in Fig. 3C, the capacitance of the button would be realised by the series connection of the capacitance between finger and transparent conductive layer 222 and the capacitance between the transparent conductive layer 222 and the touch sensor area 12. If both capacitances are large, the capacitance of the button 1 would remain large.

Fig. 9 shows now a top view on a system with the touch screen 1 and the button 2. Preferably, the touch sensor area 12 is larger than the display area 13. The display area 13 corresponds here to the touch screen area. Preferably, the touch sensor area 12 provides a frame around the display area 13. The button 2 and/or the support member 21 is fixed, preferably glued on the touch screen area. The display image of the display area 13 under the transparent user contact surface of the activation member 22 is visible through the transparent user contact surface. The activation of the button 2 is detectable by the touch sensor of the touch screen 1 as described above. Thus, the button 2 needs just to be fixed on the touch screen area. The touch screen area must not be opened for connecting an electrical button activation mechanism or for connecting an LCD display in the button 2. This reduces the complexity of the button 2 significantly. Due to the described transparent conductive layer 222, the activation of the button 2 can be detected with a high certainty without negative effects on the transparency quality of the transparent user contact surface.

The thickness of the layers and other proportions shown in the drawings for reasons of a better presentation correspond not to the true proportions.

## Claims

1. Button for a capacitive touch screen (1) comprising
a support member (21) comprising a flat support surface (211) for fixing the support member (21) on the capacitive touch screen (1), wherein the flat support surface (211) defines the screen plane (14);
an activation member (22) which is movable towards the screen plane (14) for touching the screen plane (14) to activate the button (2), wherein the activation member (22) comprises a transparent user contact surface and a touch screen contact surface (225), wherein the transparent user contact surface is configured to transfer information displayed on the capacitive touch screen (1) under the transparent user contact surface and is configured such that a user can press on the transparent contact surface to activate the activation member (22), wherein touch screen contact surface (225) is configured to touch the screen plane (14), when the activation member (22) is activated, wherein the activation member (22) comprises a transparent conductive layer (222) under the transparent user contact surface;
**characterized in that**
a material of the transparent conductive layer (222) is encapsulated for not coming in contact with ambient air or with the user.

2. Button according to claim 1, wherein the transparent user contact surface is insulated from the transparent conductive layer (222).

3. Button according to claim 2, wherein the transparent user contact surface is insulated from the transparent conductive layer (222) such that charges of a user contacting the transparent user contact surface are not electrically conducted to the transparent conductive layer (222), and/or such that a capacitance is created between a user contacting the transparent user contact surface and the transparent conductive layer (222).

4. Button according to one of claims 1 to 3, wherein the activation member comprises an activation member body with a bottom surface facing towards the screen plane and a top surface being opposite to the bottom surface, wherein the transparent conductive layer is arranged on the bottom surface covered by a protective layer (223).

5. Button according to one of claims 1 to 4, wherein the material of the transparent conductive layer (222) is a transparent conducting oxide, in particular of an indium tin oxide.

6. Button according to one of claims 1 to 5, wherein the conductive contact portion (224) and/or the touch screen contact surface (225) is arranged, preferably completely, under the support member (21).

7. Button according to one of claims 1 to 6, wherein the activation member (22) comprises an activation member body (221) with a bottom surface facing towards the screen plane (14) and a top surface being opposite to the bottom surface, wherein the bottom surface has a concave shape forming a cavity between the screen plane (14) and the bottom surface.

8. Button according to claim 4 or 7, wherein the bottom surface and/or the transparent conductive layer (222) is parallel to the top surface.

9. Button according to one of claims 1 to 8, wherein the activation member (22) is rigid and the button (2) is configured to allow a translational movement of the activation member (22) in the support member (21) towards the screen plane (14).

10. Button according to one of claims 1 to 9, wherein the touch screen contact surface (225) comprises a conductive contact portion (224) configured to be detected by the capacitive touch screen (1), when the touch screen contact surface (225) touches the screen plane (14), wherein the transparent conductive layer (222) is conductively connected with the conductive contact portion (224).

11. Button according to one of claims 1 to 9, wherein the transparent conductive layer (222) is arranged such that the touch screen can detect directly the transparent conductive layer (222) pressed by a human with the touch screen contact surface (225) against the screen plane (14).

12. System comprising a capacitive touch screen (1) and a button (2) according to one of claims 1 to 11, wherein the capacitive touch screen (1) comprises a touch screen surface (14) comprising a display area (13) for displaying information and comprising a touch sensor area (12) for detecting a touch of a user on the touch sensor area (12), wherein the display area (13) and the touch sensor area (12) overlapping at least partially in a touch screen area.

13. System according to claim 12, wherein the flat support surface (211) of the support member (21) is glued on the touch screen area.

14. System according to claim 13 comprising a button activation detector configured to detect an activation of the button based the detection of a contact of the conductive contact portion (224) of the activation member (22) on the touch screen surface (14).

## Amended claims

### Amended claims in accordance with Rule 137(2) EPC.

1. Button for a capacitive touch screen (1) comprising
a support member (21) comprising a flat support surface (211) for fixing the support member (21) on the capacitive touch screen (1), wherein the flat support surface (211) defines the screen plane (14);
an activation member (22) which is movable towards the screen plane (14) for touching the screen plane (14) to activate the button (2), wherein the activation member (22) comprises a transparent user contact surface and a touch screen contact surface (225), wherein the transparent user contact surface is configured to transfer information displayed on the capacitive touch screen (1) under the transparent user contact surface and is configured such that a user can press on the transparent contact surface to activate the activation member (22), wherein touch screen contact surface (225) is configured to touch the screen plane (14), when the activation member (22) is activated;
**characterized in that**
the activation member (22) comprises a transparent conductive layer (222) under the transparent user contact surface; and
a material of the transparent conductive layer (222) is encapsulated for not coming in contact with ambient air or with the user.

2. Button according to claim 1, wherein the transparent user contact surface is insulated from the transparent conductive layer (222).

3. Button according to claim 2, wherein the transparent user contact surface is insulated from the transparent conductive layer (222) such that charges of a user contacting the transparent user contact surface are not electrically conducted to the transparent conductive layer (222), and/or such that a capacitance is created between a user contacting the transparent user contact surface and the transparent conductive layer (222).

4. Button according to one of claims 1 to 3, wherein the activation member comprises an activation member body with a bottom surface facing towards the screen plane and a top surface being opposite to the bottom surface, wherein the transparent conductive layer is arranged on the bottom surface covered by a protective layer (223).

5. Button according to one of claims 1 to 4, wherein the material of the transparent conductive layer (222) is a transparent conducting oxide, in particular of an indium tin oxide.

6. Button according to one of claims 1 to 5, wherein the conductive contact portion (224) and/or the touch screen contact surface (225) is arranged, preferably completely, under the support member (21).

7. Button according to one of claims 1 to 6, wherein the activation member (22) comprises an activation member body (221) with a bottom surface facing towards the screen plane (14) and a top surface being opposite to the bottom surface, wherein the bottom surface has a concave shape forming a cavity between the screen plane (14) and the bottom surface.

8. Button according to claim 4 or 7, wherein the bottom surface and/or the transparent conductive layer (222) is parallel to the top surface.

9. Button according to one of claims 1 to 8, wherein the activation member (22) is rigid and the button (2) is configured to allow a translational movement of the activation member (22) in the support member (21) towards the screen plane (14).

10. Button according to one of claims 1 to 9, wherein the touch screen contact surface (225) comprises a conductive contact portion (224) configured to be detected by the capacitive touch screen (1), when the touch screen contact surface (225) touches the screen plane (14), wherein the transparent conductive layer (222) is conductively connected with the conductive contact portion (224).

11. Button according to one of claims 1 to 9, wherein the transparent conductive layer (222) is arranged such that the touch screen can detect directly the transparent conductive layer (222) pressed by a human with the touch screen contact surface (225) against the screen plane (14).

12. System comprising a capacitive touch screen (1) and a button (2) according to one of claims 1 to 11, wherein the capacitive touch screen (1) comprises a touch screen surface (14) comprising a display area (13) for displaying information and comprising a touch sensor area (12) for detecting a touch of a user on the touch sensor area (12), wherein the display area (13) and the touch sensor area (12) overlapping at least partially in a touch screen area.

13. System according to claim 12, wherein the flat support surface (211) of the support member (21) is glued on the touch screen area.

14. System according to claim 13 comprising a button activation detector configured to detect an activation of the button based the detection of a contact of the conductive contact portion (224) of the activation member (22) on the touch screen surface (14).
